# EUROPEAN PATENT APPLICATION

(11) **EP 4 779 904 A1**
(43) Date of publication of application: **22.07.2026**
(21) Application number: 24867479.8
(22) Date of filing: 19.09.2024
(51) Int. Cl.: H04B 17/11

(54) **METHOD FOR DETECTING CONNECTION RELATIONSHIP IN RADIO FREQUENCY CHANNEL IN BASE STATION ANTENNA AND CALIBRATING CHANNEL**

(30) Priority: 22.09.2023 CN 202311237411
(71) Applicant: HUAWEI TECHNOLOGIES CO., LTD., Shenzhen, Guangdong 518129 (CN)
(72) Inventor: LI, Jianping, Shenzhen, Guangdong 518129 (CN); LIAO, Zhiqiang, Shenzhen, Guangdong 518129 (CN); LI, Jianrong, Shenzhen, Guangdong 518129 (CN); XIE, Guoqing, Shenzhen, Guangdong 518129 (CN); XIAO, Weihong, Shenzhen, Guangdong 518129 (CN)
(74) Representative: Goddar, Heinz J.
(86) International application number: PCT/CN2024/119582
(87) International publication number: WO 2025/061073

(57) **Abstract**

Embodiments of this application provide a method for detecting a connection relationship in a radio frequency channel in a base station antenna and calibrating a channel, including: receiving a sample from a calibration network, where the sample is a signal obtained by adding a phase identifier to a coupled signal of a radio frequency channel in a base station antenna through the calibration network, and the phase identifier is a phase value used to mark an antenna port connected to a radio remote unit RRU port on the radio frequency channel; and learning of, based on the phase identifier, an antenna port that is actually connected to the RRU port. In technical solutions provided in embodiments of this application, no component needs to be added, and no product size needs to be increased, thereby effectively resolving a problem of high-cost detection of a connection relationship between an RRU port and an antenna port on a radio frequency channel.

## Description

This application claims priority to Chinese Patent Application No. 202311237411.8, filed with the China National Intellectual Property Administration on September 22, 2023 and entitled "METHOD FOR DETECTING CONNECTION RELATIONSHIP IN RADIO FREQUENCY CHANNEL IN BASE STATION ANTENNA AND CALIBRATING CHANNEL", which is incorporated herein by reference in its entirety.

### TECHNICAL FIELD

This application relates to the field of wireless communication technologies, and specifically, to a method for detecting a connection relationship in a radio frequency channel in a base station antenna and calibrating a channel.

### BACKGROUND

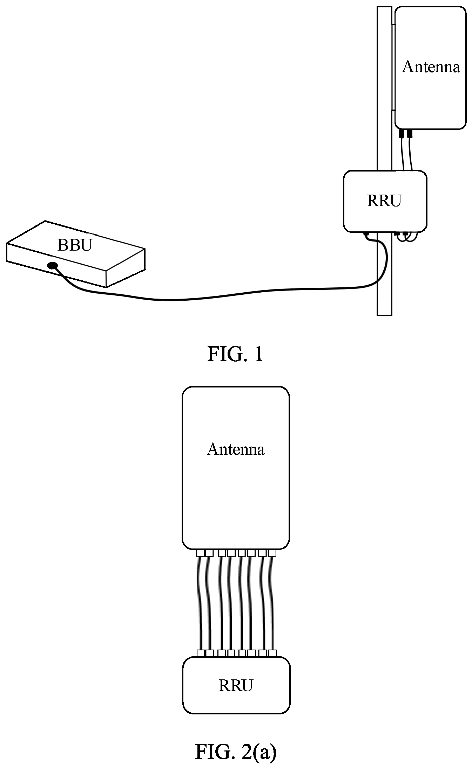

In wireless communication technologies, base stations provide wireless signal transmission services for wireless terminals and wired communication networks. As shown in FIG. 1, a base station includes a baseband unit (Baseband Unit, BBU), a radio remote unit (Radio Remote Unit, RRU), and an antenna. The BBU is mainly configured to perform channel encoding/decoding, baseband signal modulation/demodulation, protocol processing, and the like, and is usually disposed in a ground equipment room. The RRU and the antenna are usually fixed on a pole or tower tens or even dozens of meters above the ground. The BBU and RRU are connected through an optical fiber. The RRU converts an optical signal transmitted through the optical fiber into a radio frequency signal and amplifies the radio frequency signal. The RRU is connected to the antenna through a feeder, and sends a radio frequency signal to the antenna for radiation, or converts a radio frequency signal received by the antenna into a signal required by the BBU, and sends the signal to the BBU through the optical fiber.

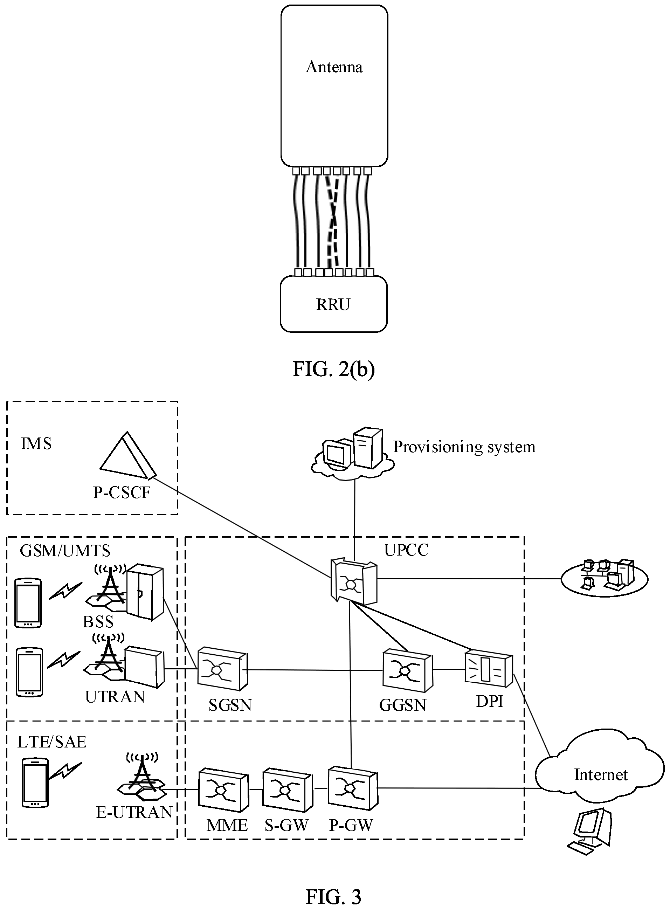

With development of the wireless communication technologies, a demand for data services keeps increasing, and a quantity of base stations is increasing. In addition, a bandwidth of each base station continuously increases, and a quantity of radio frequency channels for sending and receiving signals is also increasing. For example, 8T8R (8T8R) has become a current development trend. As shown in FIG. 2(a), the RRU and the antenna respectively have eight ports, which are respectively connected through one feeder, that is, two ends of eight feeders need to be connected to 16 ports one by one. In this multi-port case, a feeder connection error shown in FIG. 2(b) is very likely to occur.

To address a feeder connection error, a solution used in the conventional technology is: integrating a standing wave amplification point and a standing wave detection point in a phase shifter (a component configured to adjust an antenna beam downtilt angle in an antenna), and determining, by using a standing wave alarm and a signal of an antenna port, whether a line sequence (connection) of an input port is correct. However, this method has disadvantages of high costs and a large size. Another solution used in the conventional technology is: adding a bias tee and a demodulation circuit to an RRU and an antenna and adding a single-pole multi-throw switch to the antenna to obtain port information and switch information of an antenna line device, to determine a port connection relationship between the RRU and the antenna. However, this method has a disadvantage of high costs.

### SUMMARY

In view of this, embodiments of this application provide a method, an apparatus, and a device for detecting a connection relationship in a radio frequency channel in a base station antenna and calibrating a channel, to help resolve a problem of high-cost detection of a connection relationship between an RRU port and an antenna port on a radio frequency channel.

According to a first aspect, an embodiment of this application provides a method for detecting a connection relationship in a radio frequency channel in a base station antenna and calibrating a channel. The method is applied to a BBU, and includes: receiving a sample from a calibration network, where the sample is a signal obtained by adding a phase identifier to a coupled signal of a radio frequency channel in a base station antenna through the calibration network, and the phase identifier is a phase value used to mark an antenna port connected to a radio remote unit RRU port on the radio frequency channel; and learning of, based on the phase identifier, an antenna port that is actually connected to the RRU port.

In a possible implementation, after receiving the sample from the calibration network, the method further includes: obtaining a first phase value, where the first phase value is a phase value of the sample; and obtaining the phase identifier based on a second phase value and the first phase value, where the second phase value is a phase value of the coupled signal.

In a possible implementation, obtaining the phase identifier based on the second phase value and the first phase value includes: subtracting the second phase value from the first phase value to obtain the phase identifier.

In a possible implementation, learning of, based on the phase identifier, the antenna port that is actually connected to the RRU port includes: obtaining, by using a formula φ÷Δφ+1, a sequence number of the antenna port that is actually connected to the RRU port, where φ is the phase identifier, and Δφ is a phase difference value of an adjacent antenna port.

In a possible implementation, after learning of, based on the phase identifier, the antenna port that is actually connected to the RRU port, the method further includes: mapping the RRU port to the antenna port that is actually connected to the RRU port.

In a possible implementation, after learning of, based on the phase identifier, the antenna port that is actually connected to the RRU port, the method further includes: setting an amplitude and a phase of the radio frequency channel based on the phase identifier and a phase value of the sample.

In a possible implementation, setting the amplitude and the phase of the radio frequency channel based on the phase identifier and the phase value of the coupled signal includes: removing the phase identifier from the phase value of the sample to obtain the phase value of the coupled signal; and setting the amplitude and the phase of the radio frequency channel based on the phase value of the coupled signal.

According to a second aspect, an embodiment of this application provides a method for detecting a connection relationship in a radio frequency channel in a base station antenna and calibrating a channel. The method is applied to a calibration network, and includes: respectively performing phase shift processing on coupled signals from n-1 radio frequency channels in n radio frequency channels, to obtain n-1 signals including phase identifiers, where n≥2, and the phase identifier is used to uniquely mark an antenna port connected to an RRU port on a radio frequency channel to which a respective signal belongs.

In a possible implementation, the phase identifier is a discrete value.

In a possible implementation, the phase identifier is an arithmetic value or a multiple distribution value.

In a possible implementation, the phase identifier is less than or equal to 360°.

According to a third aspect, an embodiment of this application provides a calibration network, used in a base station antenna. The calibration network includes a divider/combiner and n-1 phase shift branches. The n-1 phase shift branches respectively perform phase shift processing on coupled signals from n-1 radio frequency channels in n radio frequency channels, to obtain n-1 signals including phase identifiers, where n≥2, and the phase identifier is used to uniquely mark an antenna port connected to an RRU port (that is, an antenna port that is actually connected to the RRU port) on a radio frequency channel to which a respective signal belongs. The divider/combiner includes a combiner end and n input ends. The n input ends are configured to correspondingly receive coupled signals of the n radio frequency channels, n-1 input ends in the n input ends are configured to correspondingly receive the coupled signals of the n-1 radio frequency channels, the n-1 phase shift branches are correspondingly connected to the n-1 input ends, a reference branch of the n-1 phase shift branches is connected to a reference input end, and the reference input end is an input end other than the n-1 input ends in the n input ends. The combiner end is configured to combine the n-1 signals including the phase identifiers and a coupled signal received by the reference input end into one channel for output.

In a possible implementation, the n-1 phase shift branches and the reference branch have a same phase-frequency curve slope, and a length is related to the phase identifier.

In a possible implementation, the n radio frequency channels include a first radio frequency channel, a second radio frequency channel, a third radio frequency channel, and a fourth radio frequency channel, and the first radio frequency channel is a radio frequency channel other than the n-1 radio frequency channels in the n radio frequency channels. The divider/combiner includes a first-level divider/combiner and a second-level divider/combiner, and the n-1 phase shift branches include a first phase shift branch (phase shift branch 81), a second phase shift branch (phase shift branch 81), and a third phase shift branch (phase shift branch 82). The first-level divider/combiner includes a first divider/combiner (power divider 71) and a second divider/combiner (power divider 72), and the second-level divider/combiner includes a third divider/combiner (power divider 73). A first input end of the first divider/combiner is connected to the reference branch, and is configured to receive a coupled signal of the first radio frequency channel, and a second input end is connected to the first phase shift branch, and is configured to receive a coupled signal of the second radio frequency channel, and change a phase of the coupled signal of the second radio frequency channel. A first input end of the second divider/combiner is configured to receive a coupled signal of the third radio frequency channel, and a second input end is connected to the second phase shift branch, and is configured to receive a coupled signal of the fourth radio frequency channel, and change a phase of the coupled signal of the fourth radio frequency channel. A first input end of the third divider/combiner is connected to a combiner end of the first divider/combiner, and a second input end is connected to a combiner end of the second divider/combiner through the third phase shift branch.

In a possible implementation, the n radio frequency channels further include a fifth radio frequency channel, a sixth radio frequency channel, a seventh radio frequency channel, and an eighth radio frequency channel; the first-level divider/combiner further includes a fourth divider/combiner (power divider 74) and a fifth divider/combiner (power divider 75), the second-level divider/combiner further includes a sixth divider/combiner (power divider 76), the divider/combiner further includes a third-level divider/combiner, and the third-level divider/combiner further includes a seventh divider/combiner (power divider 77); and the phase shift branches further include a fourth phase shift branch (phase shift branches 83 and 8013), a fifth phase shift branch (phase shift branches 82 and 8012), a sixth phase shift branch (phase shift branches 81 and 8011), and a seventh phase shift branch (phase shift branches 81 and 8011). A combiner end of the third divider/combiner is connected to a first input end of the seventh divider/combiner, and a second input end of the seventh divider/combiner is connected to a combiner end of the sixth divider/combiner through the fourth phase shift branch; a first input end of the sixth divider/combiner is connected to a combiner end of the fourth divider/combiner, and a second input end is connected to a combiner end of the fifth divider/combiner through the fifth phase shift branch; a first input end of the fourth divider/combiner is configured to receive a coupled signal of the fifth radio frequency channel, and a second input end is connected to the sixth phase shift branch, and is configured to receive and change a phase of a coupled signal of the sixth radio frequency channel; and a first input end of the fifth divider/combiner is configured to receive a coupled signal of the seventh radio frequency channel, and a second input end is connected to the seventh phase shift branch, and is configured to receive and change a phase of a coupled signal of the eighth radio frequency channel.

In a possible implementation, the divider/combiner is a T-shaped power divider or a Wilkinson power divider.

In a possible implementation, the phase identifier is a discrete value.

In a possible implementation, the phase identifier is an arithmetic value or a multiple distribution value.

In a possible implementation, the phase identifier is less than or equal to 360°.

In a possible implementation, the n-1 phase shift branches each include a first transmission line, a first short-circuit line, and a second short-circuit line, where the first transmission line is connected to a corresponding input end in the n-1 input ends; lengths of the first short-circuit line and the second short-circuit line each are one quarter of a wavelength of the coupled signal; one end of the first short-circuit line and the second short-circuit line is grounded; and the other end is connected to the first transmission line, and a distance between the first short-circuit line and the second short-circuit line is one quarter of the wavelength of the coupled signal; or the other end of the first short-circuit line and the second short-circuit line is open-circuited, a middle point is connected to the first transmission line, and a distance between the first short-circuit line and the second short-circuit line is half of the wavelength of the coupled signal. The reference branch is the second transmission line, and is connected to the reference input end. A length difference between the first transmission line and the second transmission line is related to the phase identifier.

According to a fourth aspect, an embodiment of this application provides a base station antenna, including an array antenna and the calibration network according to the third aspect. The array antenna includes n antenna ports that are correspondingly coupled to the n input ends of the calibration network.

According to a fifth aspect, an embodiment of this application provides an apparatus for detecting a connection relationship in a radio frequency channel in a base station antenna and calibrating a channel. The apparatus is used in a BBU, and includes a receiving module and an identification module. The receiving module is configured to receive a sample from a calibration network, where the sample is a signal obtained by adding a phase identifier to a coupled signal of a radio frequency channel in a base station antenna through the calibration network, and the phase identifier is a phase value used to mark an antenna port connected to an RRU port on the radio frequency channel. The identification module is configured to learn of, based on the phase identifier, an antenna port that is actually connected to the RRU port.

In a possible implementation, the apparatus further includes a first obtaining module and a second obtaining module. The first obtaining module is configured to obtain a first phase value after the receiving module receives the sample from the calibration network, where the first phase value is a phase value of the sample. The second obtaining module is configured to obtain the phase identifier based on a second phase value and the first phase value, where the second phase value is a phase value of the coupled signal.

In a possible implementation, the second obtaining module is further configured to subtract the second phase value from the first phase value to obtain the phase identifier.

In a possible implementation, the identification module is further configured to obtain, by using a formula φ÷Δφ+1, a sequence number of the antenna port that is actually connected to the RRU port, where φ is the phase identifier, and Δφ is a phase difference value of an adjacent antenna port.

In a possible implementation, the apparatus further includes an adjustment module, configured to: after the identification module learns of, based on the phase identifier, the antenna port that is actually connected to the RRU port, map the RRU port to the antenna port that is actually connected to the RRU port.

In a possible implementation, the apparatus further includes an amplitude and phase setting module, configured to: after the identification module learns of, based on the phase identifier, the antenna port that is actually connected to the RRU port, set an amplitude and a phase of the radio frequency channel based on the phase identifier and a phase value of the sample.

In a possible implementation, the amplitude and phase setting module is further configured to: remove the phase identifier from the phase value of the sample to obtain a phase value of the coupled signal; and set the amplitude and the phase of the radio frequency channel based on the phase value of the coupled signal.

When the first aspect is implemented by using software, functions may be divided into different modules according to an actual requirement. In the apparatus provided in the fifth aspect, division into modules corresponds to the method provided in the first aspect, and is merely an example rather than a limitation.

According to a sixth aspect, an embodiment of this application provides a BBU, including the apparatus for detecting a connection relationship in a radio frequency channel in a base station antenna and calibrating a channel according to the fifth aspect.

According to a seventh aspect, an embodiment of this application provides an electronic device, including a memory configured to store computer program instructions and a processor configured to execute the program instructions. When the computer program instructions are executed by the processor, the electronic device is triggered to perform the method according to the first aspect.

According to an eighth aspect, an embodiment of this application provides a computer-readable storage medium. The computer-readable storage medium includes a stored program, and when the program runs, a device in which the computer-readable storage medium is located is controlled to perform the method according to the first aspect.

According to a ninth aspect, an embodiment of this application provides a computer program product. The computer program product includes executable instructions, and when the executable instructions are executed on a computer, the computer is enabled to perform the method according to the first aspect.

In embodiments of this application, a phase identifier used to mark an antenna port is added in a calibration network, so that a BBU can learn of an antenna port that is actually connected to an RRU port on each radio frequency channel, and no component needs to be added or no product size needs to be increased, thereby effectively resolving a problem of high-cost detection of a connection relationship between an RRU port and an antenna port on a radio frequency channel. In addition, the BBU further sets an amplitude and a phase of each radio frequency channel based on the phase identifier, thereby implementing channel calibration.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a diagram of a structure of a base station;
FIG. 2(a) is a diagram of a feeder connection in a radio frequency channel in an 8T8R base station antenna;
FIG. 2(b) is a diagram of another feeder connection in a radio frequency channel in an 8T8R base station antenna;
FIG. 3 is a diagram of a wireless communication network architecture according to an embodiment of this application;
FIG. 4 is a diagram of a base station according to an embodiment of this application;
FIG. 5 is a logical diagram of a calibration network according to an embodiment of this application;
FIG. 6 is a logical diagram of another calibration network according to an embodiment of this application;
FIG. 7(a) is a diagram of a structure of a calibration network according to an embodiment of this application;
FIG. 7(b) is a diagram of a structure of another calibration network according to an embodiment of this application;
FIG. 8(a) is a diagram of a structure of a phase shift branch according to an embodiment of this application;
FIG. 8(b) is a diagram of a structure of another phase shift branch according to an embodiment of this application;
FIG. 9 is a diagram of a structure of another calibration network according to an embodiment of this application;
FIG. 10(a) is a diagram of a feeder connection in a radio frequency channel according to an embodiment of this application;
FIG. 10(b) is a diagram of a feeder connection in another radio frequency channel according to an embodiment of this application; and
FIG. 11 is a diagram of a relationship between a phase identifier and an antenna port connected to an RRU port on eight radio frequency channels according to an embodiment of this application.

### DESCRIPTION OF EMBODIMENTS

To better understand technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

Terms used in embodiments of this application are merely for the purpose of illustrating specific embodiments, and are not intended to limit this application. Terms "a", "the foregoing", and "the" of singular forms used in embodiments and the appended claims of this application are also intended to include plural forms, unless otherwise specified in the context clearly.

It should be understood that a term "and/or" used in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

A wireless communication network architecture is shown in FIG. 3. A base station is disposed in both a global system for mobile communication (Global System for Mobile Communication, GSM)/universal mobile telecommunications system (Universal Mobile Telecommunications System, UMTS) and an evolved UTRAN (Evolved E-UTRAN) in long term evolution (Long Term Evolution, LTE)/system architecture evolution (System Architecture Evolution, SAE). Technical solutions provided in embodiments of this application may be applied to any base station in the wireless communication network architecture shown in FIG. 3, for example, a base station subsystem (Base Station Subsystem, BSS) base station or a UMTS terrestrial radio access network (UMTS Terrestrial Radio Access Network, UTRAN) base station in GSM/UMTS, or an evolved UTRAN (Evolved E-UTRAN) base station in LTE/SAE.

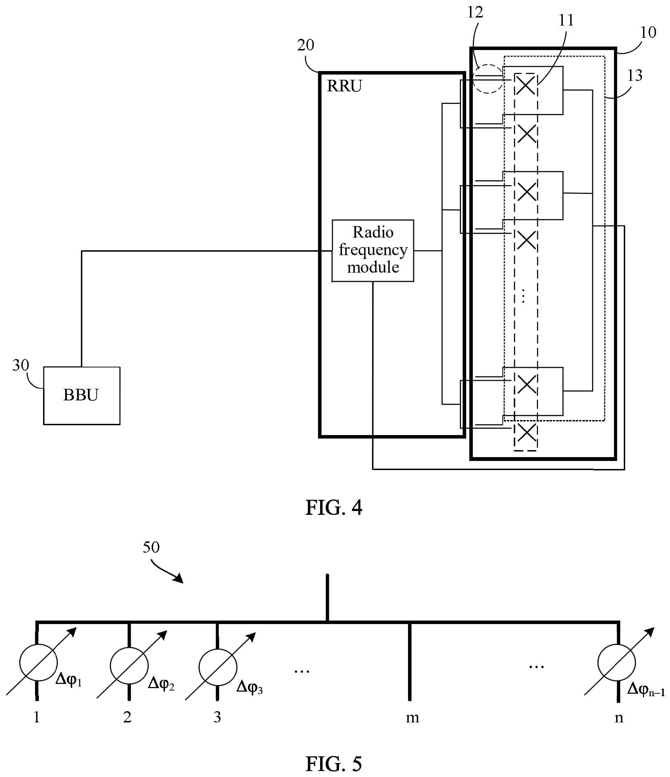

An antenna part of a base station is configured to connect a mobile user terminal and a wireless network radio frequency front-end. To calibrate amplitudes and phases between different radio frequency channels, a calibration network is usually used in a base station antenna, to send, to a BBU, some energy of a radio frequency signal of an antenna port that is coupled by a coupler, so that the BBU adjusts an amplitude and a phase of a radio frequency signal in each radio frequency channel based on signal amplitude-phase consistency in the some energy, to implement channel calibration. An antenna part 10 shown in FIG. 4 includes an array antenna 11, a coupler 12, and a calibration network 13 (excluding a half-wave dipole in the array antenna 11). The array antenna 11 is formed by arranging several half-wave dipoles according to a specific rule, and may be an active array antenna or a passive array antenna. The coupler 12 is located between an antenna port connected to an RRU 20 and a corresponding half-wave dipole, and samples a radio frequency signal received by the corresponding antenna port. A sample obtained through sampling is transmitted to the RRU 20 through the calibration network 13 and is converted by a radio frequency module into a signal that can be processed by a BBU 30, and then the signal is sent back to the BBU 30. The BBU 30 determines a relative amplitude change and/or a relative phase change of a corresponding radio frequency channel based on the sample, and adjusts, based on the relative amplitude change and/or the relative phase change, an amplitude and a phase applied to the radio frequency channel, to implement channel calibration. According to a method for detecting a connection relationship in a radio frequency channel in a base station antenna provided in embodiments of this application, a phase identifier is added to a sample through a calibration network, to mark a corresponding antenna port, and a BBU determines, based on the phase identifier, an antenna port that is actually connected to an RRU port on a radio frequency channel, to learn of an actual connection relationship between the RRU port and the antenna port on the radio frequency channel. A standing wave amplification point and a standing wave detection point do not need to be integrated into a phase shifter, and a bias tee, a demodulation circuit, and a single-pole double-throw switch do not need to be added. This can effectively reduce costs. In addition, compared with an existing calibration network that is used only for channel calibration, the calibration network provided in embodiments of this application not only can be used for channel calibration, but also can be further used to detect an actual connection relationship between an RRU port and an antenna port on a radio frequency channel.

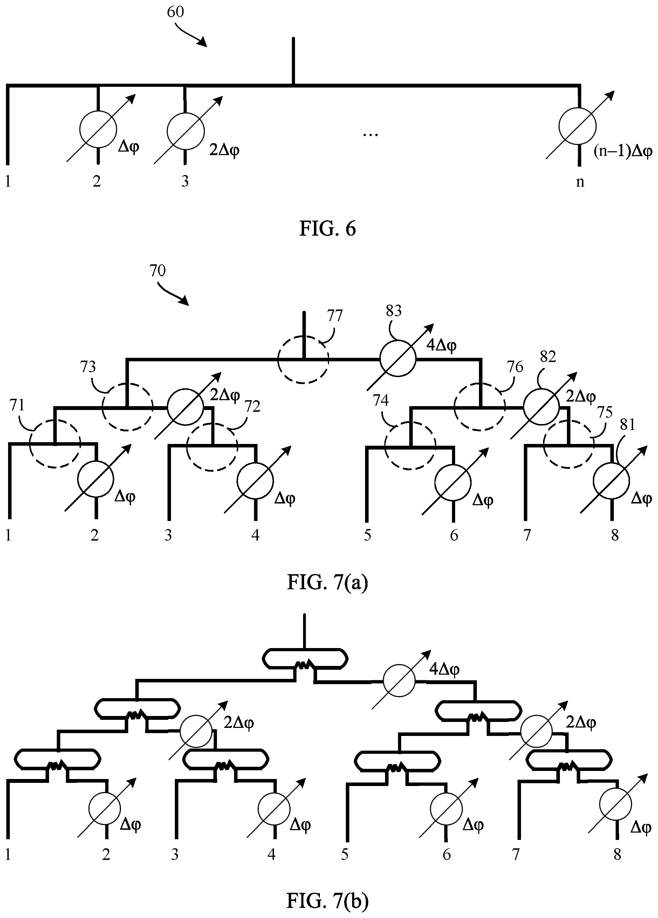

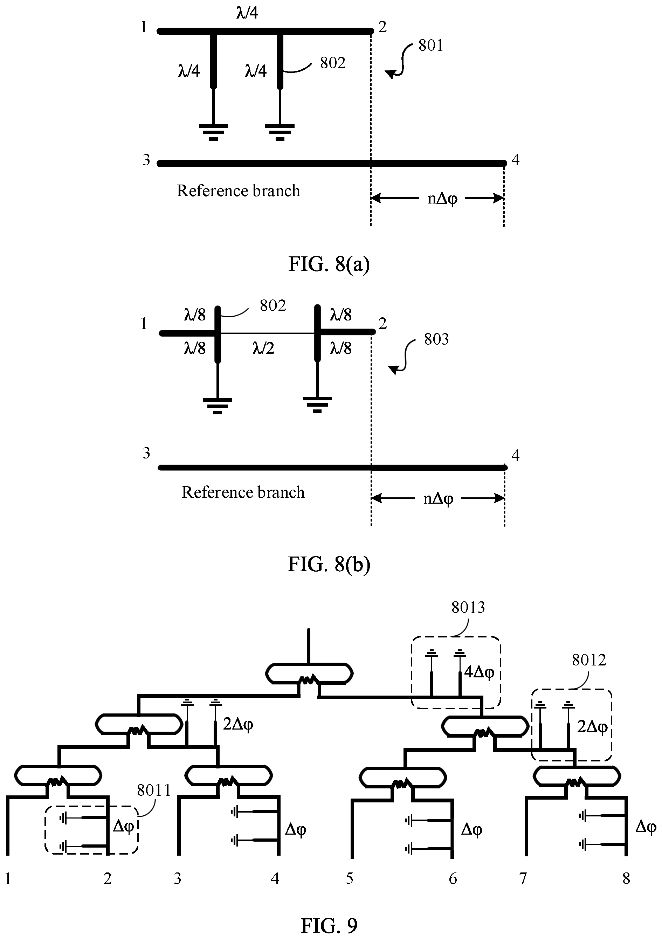

The calibration network includes an input end, a divider/combiner (as shown in FIG. 7(a), FIG. 7(b), and FIG. 9), and an output end. The input end is in one-to-one correspondence with an antenna port, and receives a sample obtained by a coupler through sampling. The divider/combiner combines samples received by a plurality of input ends into one channel for output by the output end. Therefore, phase shifting processing may be performed on a sample at a corresponding input end, to add a phase identifier.

It is assumed that an RRU has n radio frequency channels, there are n corresponding antenna ports, and there are also n input ends of the calibration network. A phase shift circuit may be connected to each of the n input ends, so that phases of samples of radio frequency signals on the n radio frequency channels are moved differently, causing phase differences from the original phases of the samples, namely, phase identifiers. For example, a phase difference generated after a sample of a 1^{st} radio frequency channel passes through a phase shift circuit is Δφ1, a phase difference generated after a sample of a 2^{nd} radio frequency channel passes through a phase shift circuit is Δφ2, ..., and a phase difference generated after a sample of an n^{th} radio frequency channel passes through a phase shift circuit is Δφn, where Δφ1, Δφ2, ..., and Δφn are not equal to each other, and are phase identifiers added to the samples of the n radio frequency channels to mark the n antenna ports. Δφ1, Δφ2, ..., and Δφn may be discrete values, for example, in an arithmetic numerical distribution or an arbitrary multiple distribution. It should be noted that, during actual application, Δφ1, Δφ2, ..., and Δφn need to be greater than a system error. Considering uniqueness and feasibility of the phase identifiers, a preferred manner is that Δφ1, Δφ2, ..., and Δφn≤360°, and Δφ1, Δφ2, ..., and Δφn are greater than the system error. Values of the following phase identifiers are similar, and are not repeated.

A manner of adding a phase identifier to a sample in a calibration network may alternatively be connecting one input end to a reference branch and connecting a remaining input end to a phase shift branch, so that phase differences are generated between samples of the input ends as phase identifiers to mark antenna ports. As shown in FIG. 5, in a calibration network 50, an m^{th} input end is connected to a reference branch, and remaining input ends are correspondingly connected to phase shift branches, so that different phase differences Δφ1, Δφ2, Δφ3, ..., Δφn-1 are sequentially generated for samples of a 1^{st} input end, a 2^{nd} input end, a 3^{rd} input end, ..., an (m-1)^{th} input end, an (m+1)^{th} input end, ..., and an n^{th} input end relative to a sample of the m^{th} input end as phase identifiers of corresponding antenna ports other than an m^{th} port in the n input ends, where a phase identifier of an antenna port corresponding to the m^{th} input end is 0.

A preferred manner is shown in FIG. 6. In a calibration network 60, a 1^{st} input end is a reference branch, and remaining input ends are connected to phase shift branches. Phase differences between a 2^{nd} input end, a 3^{rd} input end, ..., and an n^{th} input end and the reference branch are respectively Δφ, 2Δφ, ..., and (n-1)Δφ. Therefore, when the n input ends receive samples, phase identifiers of corresponding antenna ports are respectively added: 0, Δφ, 2Δφ, ..., and (n-1)Δφ.

In embodiments of this application, the phase identifier is preferably a non-frequency-varying phase shift, for example, 0, Δφ, 2Δφ, ..., and (n-1)Δφ. This is because radio frequency cable lengths, couplers, connectors, or the like between an RRU and an antenna are inconsistent, causing a great difference between electrical lengths of different radio frequency channels (which may exceed one wavelength). If the phase identifier is a frequency-varying phase shift, that is, different path differences are introduced between different radio frequency channels in the calibration network, it is difficult to effectively mark each radio frequency channel, making it difficult to identify whether a feeder connection between the RRU and the antenna is incorrect. Therefore, in calibration network embodiments of this application, a non-frequency-varying phase shift is used as a phase identifier to mark an antenna port on a radio frequency channel, and a phase identifier is used to identify an antenna port from which a signal of each radio frequency channel comes. This avoids impact of inconsistency of radio frequency cable lengths, couplers, connectors, or the like, and helps implement detection of a connection relationship in a radio frequency channel in a base station antenna and channel calibration.

In the calibration network provided in embodiments of this application, a divider may be a one-to-two divider, a one-to-four divider, a one-to-six divider, a one-to-eight divider, or the like; or a combiner may be a two-in-one combiner, a four-in-one combiner, a six-in-one combiner, an eight-in-one combiner, or the like. The calibration network shown in FIG. 5 or FIG. 6 may include a one-to-n divider or an n-in-one combiner at the n input ends.

A calibration network embodiment provided in this application is applied to an 8-channel antenna. As shown in FIG. 7(a), a calibration network 70 includes seven T-shaped power dividers: power dividers 71 to 77. The seven T-shaped power dividers are grouped into three levels in total. The first-level power divider includes the power dividers 71, 72, 74, and 75 (corresponding to a first power divider, a second power divider, a fourth power divider, and a fifth power divider), the second-level power divider includes power dividers the 73 and 76 (a third power divider and a sixth power divider), and the third-level power divider is the power divider 77 (a seventh power divider). A combiner end of the first-level power divider is connected to a divider end of the second-level power divider, and a combiner end of the second-level power divider is connected to a divider end of the third-level power divider. Second input ends of the power dividers 71, 72, 74, and 75 each are connected to a phase shift branch 81, and a phase difference relative to a reference branch connected to a respective first input end is Δφ (Δφ≤45°). Second input ends of the power dividers 73 and 76 each are connected to a phase shift branch 82, and a phase difference relative to a reference branch connected to a respective first input end is 2Δφ. A second input end of the power divider 77 is connected to a phase shift branch 83, and a phase difference relative to a reference branch connected to a first input end is 4Δφ.

Eight samples from eight antenna ports are combined into four channels by the first-level power divider. After passing through the first-level power divider, the samples sampled from the 2^{nd} antenna port, the 4^{th} antenna port, the 6^{th} antenna port, and the 8^{th} antenna port are phase-shifted by Δφ.

The samples are combined into two channels by the second-level power divider. After passing through the second-level power divider, the samples sampled from the 3^{rd} antenna port, the 4^{th} antenna port, the 7^{th} antenna port, and the 8^{th} antenna port are phase-shifted by 2Δφ, and the samples sampled from the 4^{th} antenna port and 8^{th} antenna port are phase-shifted by 3Δφ in total.

The samples are combined into one channel by the third-level power divider. After passing through the third-level power divider, the samples sampled from the 5^{th} antenna port, the 6^{th} antenna port, the 7^{th} antenna port, and the 8^{th} antenna port are phase-shifted by 4Δφ, and the samples sampled from the 6^{th} antenna port, the 7^{th} antenna port, and the 8^{th} antenna port are respectively phase-shifted by 5Δφ, 6Δφ, and 7Δφ in total. A quantity of dividers/combiners and a quantity of levels of dividers/combiners herein are determined based on a quantity of radio frequency channels in actual application and a quantity of branches of used dividers/combiners, and are not limited herein. For example, as a variant of this embodiment, when there are four radio frequency channels, and a divider/combiner is a one-to-two or two-in-one divider/combiner, there are three dividers/combiners that are grouped into two levels of dividers/combiners (a first-level divider/combiner and a second-level divider/combiner), where the first-level divider/combiner includes two dividers/combiners (a first divider/combiner and a second divider/combiner), and the second-level divider/combiner includes one divider/combiner (a third divider/combiner). When there are four radio frequency channels, and a divider/combiner is a one-to-four or four-in-one divider/combiner, the calibration network needs only one divider/combiner, and a connected phase shift branch may be designed in a similar manner according to a phase shifting principle in the context.

As a variant of this embodiment, in a calibration network shown in FIG. 7(b), the T-shaped power divider is replaced with a Wilkinson (Wilkinson) power divider, and a principle is the same as that in FIG. 7(a).

According to the calibration network provided in this embodiment of this application, a multiple-input one-output calibration network is formed by using a T-shaped power divider or a Wilkinson power divider. This can implement a miniaturization layout.

Finally, the sample that is sampled from the 1^{st} antenna port and that is output by the third-level power divider is not phase-shifted, which may be considered that an added phase identifier is 0; and the samples sampled from the 2^{nd} antenna port to the 8^{th} antenna port are respectively phase-shifted by Δφ, 2Δφ, 3Δφ, 4Δφ, 5Δφ, 6Δφ, and 7Δφ, which may be considered that phase identifiers Δφ, 2Δφ, 3Δφ, 4Δφ, 5Δφ, 6Δφ, and 7Δφ are respectively added. It may be understood that these samples include RRU port information, for example, an RRU port sequence number or information uniquely corresponding to an RRU port, and a phase identifier used to mark an antenna port is added through the calibration network. In this way, subsequently, the BBU can correspondingly learn of an actual connection relationship between an RRU and an antenna on each radio frequency channel by using a sample of each radio frequency channel.

In the foregoing embodiments, the phase shift branch may be a phase shift branch 801 shown in FIG. 8(a), and includes a line segment 12 (a first transmission line) and two grounded short-circuit lines 802. A distance between the two short-circuit lines 802 and lengths of the short-circuit lines 802 each are one quarter of a wavelength of a sample radio frequency signal.

The line segment 12 represents a transmission line that needs to be phase-shifted in the foregoing embodiments, for example, a transmission line between an input end other than the m^{th} input end shown in FIG. 5 and the coupler, a transmission line between an input end other than the 1^{st} transmission line shown in FIG. 6 and the coupler, a transmission line between the second input end of the first-level divider/combiner shown in FIG. 7(a) and FIG. 7(b) and the coupler, or a transmission line between a combiner end of a current-level (first-level or second-level) divider/combiner and a second input end of a next-level (second-level or third-level) divider/combiner.

A line segment 34 represents a transmission line used as a reference branch in the foregoing embodiments, for example, a transmission line between the m^{th} input end shown in FIG. 5 and the coupler, a transmission line between the 1^{st} transmission line shown in FIG. 6 and the coupler, a transmission line between the first input end of the first-level divider/combiner shown in FIG. 7(a) and FIG. 7(b) and the coupler, or a transmission line between a combiner end of a current-level (first-level or second-level) divider/combiner and a first input end of a next-level (second-level or third-level) divider/combiner.

When the short-circuit line 802 is at a low frequency, it is equivalent to inductive loading, and a phase of the phase shift branch 801 is ahead of that when there is no inductive loading. When the short-circuit line 802 is at a high frequency, it is equivalent to capacitive loading, and a phase of the phase shift branch 801 lags behind that when there is no capacitive loading. Therefore, loading the quarter-wavelength short-circuit line 802 can change a phase-frequency curve slope of the phase shift branch 801. When the foregoing phase identifier is a non-frequency-varying phase shift, a diameter (width) of the short-circuit line 802 may be adjusted, to make the phase-frequency curve slope of the phase shift branch 801 be equal to a phase-frequency curve slope of the reference branch, so that a phase difference between the reference branch and the phase shift branch 801 is a constant value and does not change with a frequency. Phase differences Δφ, 2Δφ, ..., nΔφ, and the like of the phase shift branch 801 relative to the reference branch may be implemented by adjusting a length of the line segment 12 and/or a length of the line segment 34. For example, when the line segment 35 is used as a reference branch of a plurality of phase shift branches, lengths of line segments 12 in the phase shift branches may be different, to meet phase shifting requirements of the phase shift branches. In the calibration network shown in FIG. 6, phase-frequency curve slopes of the reference branch and the phase shift branch are equal, the transmission line between the 1^{st} input end and the coupler is used as the reference branch, and a length of the transmission line is different from lengths of transmission lines between the 2^{nd} input end to the n^{th} input end and the coupler. For example, a difference between the length of the reference branch and the length of the transmission line between the 2^{nd} input end and the coupler is ΔL, and a difference between the length of the reference branch and the length of the transmission line between the 3^{rd} input end and the coupler is 2ΔL. By analogy, a difference between the length of the reference branch and the length of the transmission line between the n^{th} input end and the coupler is (n-1)ΔL. Therefore, phase differences between the reference branch and the phase shift branches connected to the 2^{nd} input end, the 3^{rd} input end, ..., and the n^{th} input end are respectively Δφ, 2Δφ, ..., and (n-1)Δφ.

Another calibration network embodiment provided in this application is shown in FIG. 9, and a difference from the embodiment shown in FIG. 7(b) lies in that a phase shift branch connected to a second input end of a first-level Wilkinson power divider is 8011, a phase shift branch connected to a second input end of a second-level Wilkinson power divider is 8012, and a phase shift branch connected to a second input end of a third-level Wilkinson power divider is 8013. When phase-frequency curve slopes of reference branches of the phase shift branches are different, phase-frequency curve slopes of the phase shift branches may also be correspondingly different. Preferably, phase-frequency curve slopes of the phase shift branches (8011, 8012, and 8013) and the reference branches of the phase shift branches are equal. When lengths of the reference branches are equal, a transmission line length of the phase shift branch 8012 is half of a transmission line length of the phase shift branch 8011, and a transmission line length of the phase shift branch 8013 is half of the transmission line length of the phase shift branch 8012.

In some other calibration network embodiments, a quantity of short-circuit lines (short-circuit lines 802 in the embodiment shown in FIG. 8(a)) in the phase shift branch is greater than 2. In a scenario to which this embodiment is applied, a frequency band of a radio frequency signal is wider.

In the foregoing embodiments, the phase shift branch may alternatively be a phase shift branch 803 shown in FIG. 8(b), and a difference from the phase shift branch 801 shown in FIG. 8(a) lies in that a distance between two short-circuit lines 802 is half of a wavelength of a radio frequency signal, and impedance of a connection line between the two short-circuit lines 802 is greater than impedance of a line segment 12. In addition, a middle point of the two short-circuit lines 802 is connected to the line segment 12, and one end of the two short-circuit lines 804 is open-circuited, and the other end is grounded.

In the base station to which the calibration network provided in the foregoing embodiments is applied, in a detection and debugging phase, the BBU first obtains phase-frequency curve slopes of radio frequency channels. For example, the BBU sends detection signals of different frequencies a plurality of times, obtains, through the calibration network, a plurality of phases corresponding to the radio frequency channels, and then obtains the phase-frequency curve slopes of the radio frequency channels based on these frequencies and phases. When the foregoing phase identifier is a non-frequency-varying phase shift, a phase identifier added by the calibration network does not affect the phase-frequency curve slope of each radio frequency channel.

Then, the BBU obtains a phase identifier used to mark an antenna port on each radio frequency channel. For example, in a detection and debugging phase or a formal running phase, after sending a signal of a frequency to a radio frequency channel, the BBU receives a sample of the signal sent by the calibration network through the RRU, and obtains a phase (an actual phase) of the sample. The BBU subtracts a theoretical phase (calculated based on a frequency value of the signal and a phase-frequency curve slope of the radio frequency channel) from the actual phase, to obtain a phase difference, that is, a phase identifier. Then, the BBU compares the phase identifier with a phase identifier that is preset for the radio frequency channel. In a case of consistency or a difference being within a preset range, it is determined that a connection between an RRU port and an antenna port on the radio frequency channel is correct; otherwise, it is determined that a connection between an RRU port and an antenna port on the radio frequency channel is incorrect.

In a specific implementation, an RRU port, an antenna port, and a phase identifier on each radio frequency channel may be correspondingly stored, to indicate a connection relationship between the RRU port and the antenna port. A storage manner may be a mapping relationship table or the like. When it is determined that a connection between an RRU port and an antenna port on a radio frequency channel is incorrect, the BBU may further modify a stored antenna port corresponding to the RRU port on the radio frequency channel and a stored phase identifier of the antenna port to a phase identifier obtained based on a sample and an antenna port corresponding to the phase identifier.

The following uses an 8-channel antenna as an example to further describe in detail an embodiment of a method for detecting a connection relationship in a radio frequency channel in a base station antenna and calibrating a channel provided in this application.

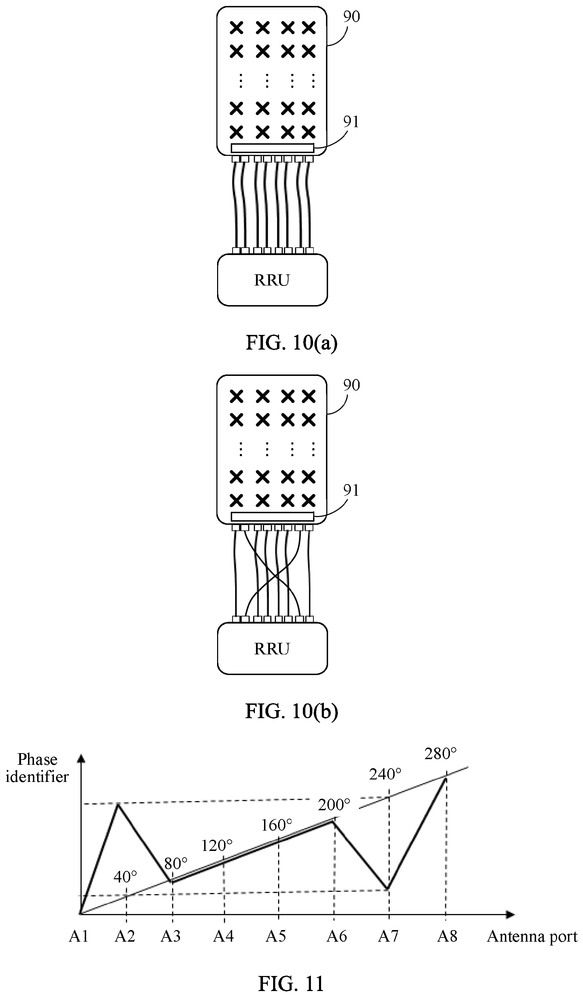

A base station antenna 90 shown in FIG. 10(a) includes a calibration board 91 and an array antenna. The calibration board 91 includes a calibration network and a carrier board thereof. The calibration network may be the calibration network provided in any of the foregoing embodiments. The array antenna includes four columns of dual-polarized radiating elements, providing eight radio frequency channels in total. It is assumed that RRU ports are sequentially numbered P1, P2, ..., and P8 from left to right, and antenna ports are sequentially numbered A1, A2, ..., and A8 from left to right. The calibration network sequentially marks the antenna ports A1, A2, ..., and A8 as 0°, 40°, 80°, ..., and 280°, as shown in FIG. 11.

Before a base station runs, based on operation instructions of an operator and a connection relationship shown in FIG. 10(a), a BBU sets and stores antenna ports connected to RRU ports on the eight radio frequency channels and phase identifiers of the antenna ports. A storage manner may be shown in Table 1 below. The phase identifiers of the antenna ports are the same as those marked by the calibration network.

When the base station runs, the BBU sends a test signal to each radio frequency channel a plurality of times based on the connection relationship between the RRU port and the antenna port on the radio frequency channel shown in FIG. 10(a), to obtain that phase-frequency curve slopes of the eight radio frequency channels are sequentially K1, K2, ..., and K8, and stores the phase-frequency curve slopes in correspondence with corresponding radio frequency channel sequence numbers, as shown in Table 1.

**Table 1 Radio frequency channel connection relationship mapping table**

| Radio frequency channel sequence number | RRU port | Antenna port | Phase identifier | Phase-frequency curve slope |
|---|---|---|---|---|
| 1 | P1 | A1 | 0° | K1 |
| 2 | P2 | A2 | 40° | K2 |
| 3 | P3 | A3 | 80° | K3 |
| 4 | P4 | A4 | 120° | K4 |
| 5 | P5 | A5 | 160° | K5 |
| 6 | P6 | A6 | 200° | K6 |
| 7 | P7 | A7 | 240° | K7 |
| 8 | P8 | A8 | 280° | K8 |

In Table 1, the RRU port and the phase-frequency curve slope always correspond to the radio frequency channel sequence number shown in Table 1, that is, always keep consistent with an actual situation. Alternatively, a radio frequency channel sequence number column may be omitted from Table 1, and the RRU port is a radio frequency channel by default. The antenna port and the phase identifier that correspond to the radio frequency channel sequence number may be inconsistent with those in Table 1 in an actual situation. As shown in FIG. 10(b), an antenna port is incorrectly connected due to an operation mistake of an operator.

Then, the BBU sends a test signal again, and receives a combined signal fed back by the calibration network. Before or after the BBU sends the test signal again, a phase value (a second phase value) of each radio frequency channel signal (before a phase identifier is added) may be obtained based on a frequency of the test signal and a phase-frequency curve slope of each radio frequency channel.

The BBU restores a PIN sequence table header in the combined signal to distinguish samples from the eight radio frequency channels. The BBU respectively extracts phase values (namely, first phase values) of the eight radio frequency channels from the samples, and then subtracts the second phase value from the first phase value of each radio frequency channel, to obtain a phase identifier of the antenna port that is actually connected to the RRU port on each radio frequency channel. Alternatively, when the calibration network adds a phase identifier by shifting a phase of a coupled signal forward, the BBU may also subtract the first phase value from the second phase value to obtain a corresponding phase identifier. As shown in FIG. 11, phase identifiers that are of antenna ports actually connected to the radio frequency channels 1 to 8 and that are obtained by the BBU are sequentially 0°, 240°, 80°, 120°, 160°, 200°, 40°, and 280°. It can be learned from comparison with Table 1 that the RRU port P2 of the radio frequency channel 2 is incorrectly connected to the antenna port A7, and the RRU port P7 of the radio frequency channel 7 is incorrectly connected to the antenna port A2.

When an antenna port of a radio frequency channel is incorrectly connected, the BBU may modify an antenna port corresponding to (or mapped to) an RRU port and a phase identifier of the antenna port, to calibrate a connection relationship between the RRU port and the antenna port on the radio frequency channel. As shown in Table 2, the antenna port A2 and the phase identifier 40° of the antenna port A2 in Table 1 are exchanged with the antenna port A7 and the phase identifier 240° of the antenna port A7, for modification into a connection relationship consistent with an actual connection situation. In this way, during actual running, the BBU sets an amplitude and a phase of each radio frequency channel based on the connection relationship in Table 2. This resolves a problem that the BBU incorrectly sets an amplitude and a phase of each radio frequency channel according to Table 1.

**Table 2 Modified radio frequency channel connection relationship mapping table**

| Radio frequency channel sequence number | RRU port | Antenna port | Phase identifier | Phase-frequency curve slope |
|---|---|---|---|---|
| 1 | P1 | A1 | 0° | K1 |
| 2 | P2 | **A7** | **240°** | **K7** |
| 3 | P3 | A3 | 80° | K3 |
| 4 | P4 | A4 | 120° | K4 |
| 5 | P5 | A5 | 160° | K5 |
| 6 | P6 | A6 | 200° | K6 |
| 7 | P7 | **A2** | **40°** | **K2** |
| 8 | P8 | A8 | 280° | K8 |

As a variant of this embodiment, the BBU may store a phase difference 40° of an adjacent antenna port, and after obtaining an actual phase identifier, for example, φ, of each radio frequency channel, obtain, by using a formula φ÷40°+1, a sequence number of an antenna port that is actually connected to the RRU port on each radio frequency channel. In this case, a phase identifier column may be omitted from Table 1.

On a radio frequency channel, due to inconsistency of feeders, connectors, or the like, feeder electrical lengths and losses between an RRU and an antenna may be inconsistent, causing great fluctuation of amplitudes and inconsistent phases of radio frequency signals between different radio frequency channels in a base station antenna. In a method for detecting a connection relationship in a radio frequency channel in a base station antenna and calibrating a channel provided in this application, after a connection relationship between an RRU and an antenna port is obtained by using the method in the foregoing embodiment (that is, an antenna port that is actually connected to the RRU port is learned of), the BBU may further set an amplitude and a phase of each radio frequency channel based on an obtained phase identifier and a phase value of a sample, to implement channel calibration. For example, the phase identifier is removed from the phase value of the sample, to obtain a phase value of a coupled signal; and the amplitude and the phase of the radio frequency channel are set based on the phase value of the coupled signal. It is assumed that the phase value of the sample that is fed back by the calibration network and that is obtained by the BBU is Φ, a radio frequency channel sequence number (an RRU port number) carried in the sample is M, and a corresponding phase identifier obtained by using the technical solution provided in the foregoing embodiment is ΔΦ. In this case, an amplitude and a phase of the radio frequency channel M are set according to Φ-ΔΦ.

In the foregoing embodiments of this application, only a small modification is made on the basis of the existing calibration network in the base station antenna, no component needs to be added, and channel logic is simple. Compared with a conventional technology (in a conventional technology 1, a standing wave point needs to be integrated into a phase shifter of each channel, and in a conventional technology 2, many components need to be integrated), the embodiment of this application can achieve low costs for implementing channel sequence number detection and channel phase calibration. In addition, the embodiment of this application is implemented only on a calibration channel. Compared with the conventional technology 1 and the conventional technology 2 in which a radio frequency channel is modified, this can reduce a loss and improve system stability, for example, reduce a passive intermodulation (Passive Intermodulation, PIM) indicator. Further, in this embodiment of this application, after obtaining the antenna port that is actually connected to the RRU port, the BBU can enable the antenna to normally operate by adjusting internal RRU logical mapping. In this way, even in actual application of the base station antenna, even if a connection line between the RRU and the antenna is incorrectly installed due to a human reason, there is no need to go to an elevated tower of the base station for correction, thereby effectively saving labor costs.

During specific implementation, the present invention further provides a computer storage medium. The computer storage medium may store a program, and when the program is executed, some or all of the steps of each embodiment of the simulation scene generation method provided in the present invention may be performed. The storage medium may be a magnetic disk, an optical disc, a read-only memory (read-only memory, ROM), a random access memory (random access memory, RAM), or the like.

During specific implementation, the present invention further provides a computer program product. The computer program product includes executable instructions, and when the executable instructions are executed on a computer, the computer is enabled to perform some or all of the steps of each embodiment of the simulation scenario generation method provided in the present invention.

A person skilled in the art may clearly understand that the technologies in embodiments of the present invention may be implemented by software in addition to a necessary general hardware platform. Based on such an understanding, the technical solutions of embodiments of the present invention essentially or the part contributing to the conventional technology may be implemented in a form of a software product. The computer software product is stored in a storage medium, such as a ROM/RAM, a hard disk, or an optical disc, and includes several instructions for instructing a computer device (which may be a personal computer, a server, a network device, or the like) to perform the methods described in embodiments or some parts of embodiments of the present invention.

Same or similar parts of embodiments of this specification may be referred to each other. Especially, an apparatus embodiment and a terminal embodiment are basically similar to a method embodiment, and therefore are described briefly. For related parts, refer to partial descriptions in the method embodiment.

## Claims

1. A method for detecting a connection relationship in a radio frequency channel in a base station antenna and calibrating a channel, wherein the method is applied to a baseband unit BBU, and comprises:
receiving a sample from a calibration network, wherein the sample is a signal obtained by adding a phase identifier to a coupled signal of a radio frequency channel in a base station antenna through the calibration network, and the phase identifier is a phase value used to mark an antenna port connected to a radio remote unit RRU port on the radio frequency channel; and
learning of, based on the phase identifier, an antenna port that is actually connected to the RRU port.

2. The method according to claim 1, wherein after receiving the sample from the calibration network, the method further comprises:
obtaining a first phase value, wherein the first phase value is a phase value of the sample; and
obtaining the phase identifier based on a second phase value and the first phase value, wherein the second phase value is a phase value of the coupled signal.

3. The method according to claim 2, wherein obtaining the phase identifier based on the second phase value and the first phase value comprises:
subtracting the second phase value from the first phase value to obtain the phase identifier.

4. The method according to any one of claims 1 to 3, wherein learning of, based on the phase identifier, the antenna port that is actually connected to the RRU port comprises:
obtaining, by using a formula φ÷Δφ+1, a sequence number of the antenna port that is actually connected to the RRU port, wherein φ is the phase identifier, and Δφ is a phase difference value of an adjacent antenna port.

5. The method according to any one of claims 1 to 4, wherein after learning of, based on the phase identifier, the antenna port that is actually connected to the RRU port, the method further comprises:
mapping the RRU port to the antenna port that is actually connected to the RRU port.

6. The method according to any one of claims 1 to 5, wherein after learning of, based on the phase identifier, the antenna port that is actually connected to the RRU port, the method further comprises:
setting an amplitude and a phase of the radio frequency channel based on the phase identifier and a phase value of the sample.

7. The method according to claim 6, wherein setting the amplitude and the phase of the radio frequency channel based on the phase identifier and the phase value of the coupled signal comprises:
removing the phase identifier from the phase value of the sample to obtain the phase value of the coupled signal; and
setting the amplitude and the phase of the radio frequency channel based on the phase value of the coupled signal.

8. A method for detecting a connection relationship in a radio frequency channel in a base station antenna and calibrating a channel, wherein the method is applied to a calibration network, and comprises:
respectively performing phase shift processing on coupled signals from n-1 radio frequency channels in n radio frequency channels, to obtain n-1 signals comprising phase identifiers, wherein n≥2, and the phase identifier is used to uniquely mark an antenna port connected to an RRU port on a radio frequency channel to which a respective signal belongs.

9. The method according to claim 8, wherein the phase identifier is a discrete value.

10. The method according to claim 9, wherein the phase identifier is an arithmetic value or a multiple distribution value.

11. The method according to any one of claims 8 to 10, wherein the phase identifier is less than or equal to 360°.

12. A calibration network, used in a base station antenna, wherein the calibration network comprises:
n-1 phase shift branches, respectively performing phase shift processing on coupled signals from n-1 radio frequency channels in n radio frequency channels, to obtain n-1 signals comprising phase identifiers, wherein n≥2, and the phase identifier is used to uniquely mark an antenna port connected to an RRU port on a radio frequency channel to which a respective signal belongs; and
a divider/combiner, comprising a combiner end and n input ends, wherein the n input ends are configured to correspondingly receive coupled signals of the n radio frequency channels, n-1 input ends in the n input ends are configured to correspondingly receive the coupled signals of the n-1 radio frequency channels, the n-1 phase shift branches are correspondingly connected to the n-1 input ends, a reference branch of the n-1 phase shift branches is connected to a reference input end, and the reference input end is an input end other than the n-1 input ends in the n input ends; and the combiner end is configured to combine the n-1 signals comprising the phase identifiers and a coupled signal received by the reference input end into one channel for output.

13. The calibration network according to claim 12, wherein the n-1 phase shift branches and the reference branch have a same phase-frequency curve slope, and a length is related to the phase identifier.

14. The calibration network according to claim 12 or 13, wherein the n radio frequency channels comprise a first radio frequency channel, a second radio frequency channel, a third radio frequency channel, and a fourth radio frequency channel, and the first radio frequency channel is a radio frequency channel other than the n-1 radio frequency channels in the n radio frequency channels;
the divider/combiner comprises a first-level divider/combiner and a second-level divider/combiner, and the n-1 phase shift branches comprise a first phase shift branch, a second phase shift branch, and a third phase shift branch;
the first-level divider/combiner comprises a first divider/combiner and a second divider/combiner, and the second-level divider/combiner comprises a third divider/combiner; and
a first input end of the first divider/combiner is connected to the reference branch, and is configured to receive a coupled signal of the first radio frequency channel, and a second input end is connected to the first phase shift branch, and is configured to receive a coupled signal of the second radio frequency channel, and change a phase of the coupled signal of the second radio frequency channel; a first input end of the second divider/combiner is configured to receive a coupled signal of the third radio frequency channel, and a second input end is connected to the second phase shift branch, and is configured to receive a coupled signal of the fourth radio frequency channel, and change a phase of the coupled signal of the fourth radio frequency channel; and a first input end of the third divider/combiner is connected to a combiner end of the first divider/combiner, and a second input end is connected to a combiner end of the second divider/combiner through the third phase shift branch.

15. The calibration network according to claim 14, wherein the n radio frequency channels further comprise a fifth radio frequency channel, a sixth radio frequency channel, a seventh radio frequency channel, and an eighth radio frequency channel; the first-level divider/combiner further comprises a fourth divider/combiner and a fifth divider/combiner, the second-level divider/combiner further comprises a sixth divider/combiner, the divider/combiner further comprises a third-level divider/combiner, and the third-level divider/combiner further comprises a seventh divider/combiner; and the phase shift branches further comprise a fourth phase shift branch, a fifth phase shift branch, a sixth phase shift branch, and a seventh phase shift branch; and
a combiner end of the third divider/combiner is connected to a first input end of the seventh divider/combiner, and a second input end of the seventh divider/combiner is connected to a combiner end of the sixth divider/combiner through the fourth phase shift branch; a first input end of the sixth divider/combiner is connected to a combiner end of the fourth divider/combiner, and a second input end is connected to a combiner end of the fifth divider/combiner through the fifth phase shift branch; a first input end of the fourth divider/combiner is configured to receive a coupled signal of the fifth radio frequency channel, and a second input end is connected to the sixth phase shift branch, and is configured to receive and change a phase of a coupled signal of the sixth radio frequency channel; and a first input end of the fifth divider/combiner is configured to receive a coupled signal of the seventh radio frequency channel, and a second input end is connected to the seventh phase shift branch, and is configured to receive and change a phase of a coupled signal of the eighth radio frequency channel.

16. The calibration network according to any one of claims 12 to 15, wherein the divider/combiner is a T-shaped power divider or a Wilkinson power divider.

17. The calibration network according to any one of claims 12 to 16, wherein the phase identifier is a discrete value.

18. The calibration network according to any one of claims 12 to 17, wherein the phase identifier is an arithmetic value or a multiple distribution value.

19. The calibration network according to any one of claims 12 to 18, wherein the phase identifier is less than or equal to 360°.

20. The calibration network according to any one of claims 12 to 19, wherein the n-1 phase shift branches each comprise a first transmission line, a first short-circuit line, and a second short-circuit line, wherein the first transmission line is connected to a corresponding input end in the n-1 input ends; lengths of the first short-circuit line and the second short-circuit line each are one quarter of a wavelength of the coupled signal; one end of the first short-circuit line and the second short-circuit line is grounded; and the other end is connected to the first transmission line, and a distance between the first short-circuit line and the second short-circuit line is one quarter of the wavelength of the coupled signal; or the other end of the first short-circuit line and the second short-circuit line is open-circuited, a middle point is connected to the first transmission line, and a distance between the first short-circuit line and the second short-circuit line is half of the wavelength of the coupled signal;
the reference branch is the second transmission line, and is connected to the reference input end; and
a length difference between the first transmission line and the second transmission line is related to the phase identifier.

21. A base station antenna, comprising an array antenna and the calibration network according to any one of claims 12 to 20, wherein the array antenna comprises n antenna ports that are correspondingly coupled to the n input ends of the calibration network.

22. An apparatus for detecting a connection relationship in a radio frequency channel in a base station antenna and calibrating a channel, wherein the apparatus is used in a BBU, and comprises:
a receiving module, configured to receive a sample from a calibration network, wherein the sample is a signal obtained by adding a phase identifier to a coupled signal of a radio frequency channel in a base station antenna through the calibration network, and the phase identifier is a phase value used to mark an antenna port connected to an RRU port on the radio frequency channel; and
an identification module, configured to learn of, based on the phase identifier, an antenna port that is actually connected to the RRU port.

23. The apparatus according to claim 22, further comprising:
a first obtaining module, configured to obtain a first phase value after the receiving module receives the sample from the calibration network, wherein the first phase value is a phase value of the sample; and
a second obtaining module, configured to obtain the phase identifier based on a second phase value and the first phase value, wherein the second phase value is a phase value of the coupled signal.

24. The apparatus according to claim 23, wherein the second obtaining module is further configured to subtract the second phase value from the first phase value to obtain the phase identifier.

25. The apparatus according to any one of claims 22 to 24, wherein the identification module is further configured to:
obtain, by using a formula φ÷Δφ+1, a sequence number of the antenna port that is actually connected to the RRU port, wherein φ is the phase identifier, and Δφ is a phase difference value of an adjacent antenna port.

26. The apparatus according to any one of claims 22 to 25, further comprising: an adjustment module, configured to: after the identification module learns of, based on the phase identifier, the antenna port that is actually connected to the RRU port, map the RRU port to the antenna port that is actually connected to the RRU port.

27. The apparatus according to any one of claims 22 to 26, further comprising:
an amplitude and phase setting module, configured to: after the identification module learns of, based on the phase identifier, the antenna port that is actually connected to the RRU port, set an amplitude and a phase of the radio frequency channel based on the phase identifier and a phase value of the sample.

28. The apparatus according to claim 27, wherein the amplitude and phase setting module is further configured to:
remove the phase identifier from the phase value of the sample to obtain a phase value of the coupled signal; and
set the amplitude and the phase of the radio frequency channel based on the phase value of the coupled signal.

29. A BBU, comprising the apparatus for detecting a connection relationship in a radio frequency channel in a base station antenna and calibrating a channel according to any one of claims 22 to 28.

30. An electronic device, comprising a memory configured to store computer program instructions and a processor configured to execute the program instructions, wherein when the computer program instructions are executed by the processor, the electronic device is enabled to perform the method according to any one of claims 1 to 7.

31. A computer-readable storage medium, wherein the computer-readable storage medium comprises a stored program, and when the program runs, a device in which the computer-readable storage medium is located is controlled to perform the method according to any one of claims 1 to 7.

32. A computer program product, wherein the computer program product comprises executable instructions, and when the executable instructions are executed on a computer, the computer is enabled to perform the method according to any one of claims 1 to 7.
